# EUROPEAN PATENT APPLICATION

(11) **EP 4 265 833 A1**
(43) Date of publication of application: **25.10.2023**
(21) Application number: 23164707.4
(22) Date of filing: 28.03.2023
(51) Int. Cl.: D06F 17/00, D06F 31/00, D06F 39/08, D06F 39/14

(54) **WASHING DEVICE**

(30) Priority: 21.04.2022 CN 202210423472
(71) Applicant: BSH Hausgeräte GmbH, 81739 München (DE)
(72) Inventor: Zhang, Shurong, Nanjing, 210042 (CN); Yang, Fan, Nanjing 210042 (CN); Liu, Shuai, Nanjing, 210046 (CN)

(57) **Abstract**

Embodiments of this application relate to a washing device (10). The washing device includes: a box (12); a fluid assembly (14); and a washing cavity (16) accommodated in the box (12). The washing cavity (16) is replaceable, the washing cavity (16) is closable or openable, the washing cavity (16) is in communication with the fluid assembly (14) when closed, and the washing cavity (16) is disconnected from the fluid assembly (14) when opened. The embodiments of this application can facilitate thorough cleaning of the washing cavity (16), classified washing, and the like.

## Description

The present invention relates to a washing device.

The existing washing device such as a pulsator washing machine, a drum washing machine, a dish washing machine, or a food washing machine generally has a fixed and non-detachable washing cavity, which is difficult to be thoroughly cleaned, and is barely satisfactory in aspects such as cleaning and health protection. In particular, an ordinary washing machine generally includes a drum and a tub, and a lot of residues in the washing process may remain in an area between the drum and the tub, for example, sebum, dander, dirt, and the like. The user cannot touch the area and cannot clean the area thoroughly either, which may cause secondary pollution to clothes.

In addition, especially for washing requirements, users often hope that different clothes can have independent washing spaces to avoid cross-contamination caused by mixed washing. For example, many users tend to wash baby clothes, underwear, socks, and the like separately, and even are unwilling to share the general washing machine for washing adult coats. In this case, users often wash these clothes by hand, or even buy one or more small washing machines to wash these clothes separately. In this way, either the housework burden or a space burden and a financial burden are increased.

The present invention is intended to provide an improved washing device.

For the above object, embodiments of the present invention relate to a washing device. The washing device includes: a box; a fluid assembly; and a washing cavity, accommodated in the box. The washing cavity is replaceable, the washing cavity is closable or openable, the washing cavity is in communication with the fluid assembly when closed, and the washing cavity is disconnected from the fluid assembly when opened.

In this way, a user can remove the washing cavity for thorough cleaning, and in addition, the user only needs one washing device equipped with a plurality of washing cavities, so that all kinds of to-be-washed things can have exclusive washing cavities, thereby avoiding cross-contamination.

In some embodiments, the washing cavity includes a holding portion configured to hold a liquid from the fluid assembly. In this way, this can be helpful in washing with the liquid in the holding portion.

In some embodiments, the box includes a cover plate connected to the fluid assembly and configured to cover the washing cavity.

In this way, this can be helpful in washing in the closed washing cavity. In some embodiments, the cover plate is located at a top of the washing cavity.

In this way, the washing device can be simple in structure.

In some embodiments, the cover plate is movable up and down relative to the washing cavity. In this way, this can be helpful in conveniently opening or closing the washing cavity.

In some embodiments, the fluid assembly includes a passage assembly. The passage assembly includes: an input connecting tube and an output connecting tube respectively connected to the cover plate, and an input tube and an output tube configured to be respectively in fluid communication with the input connecting tube and the output connecting tube.

In this way, this can be helpful for the fluid to enter and/or to be discharged from the washing cavity of the washing device.

In some embodiments, the box includes an enclosure. The enclosure includes through holes corresponding to the input tube and the output tube. In this way, this can be helpful for the input tube and the output tube to extend through the enclosure through the through holes.

In some embodiments, the passage assembly includes a branch configured to be in fluid communication with a bottom of the washing cavity and the output connecting tube.

In this way, this can be helpful in efficiently outputting the fluid from the washing cavity.

In some embodiments, the passage assembly includes a branch seal arranged around the branch to hermetically connect the branch to the output connecting tube when the cover plate covers the washing cavity.

In this way, this can be helpful in preventing leakage during fluid output.

In some embodiments, the passage assembly includes a washing seal arranged between the cover plate and the washing cavity to form a sealed space in the washing cavity.

In this way, this can be helpful in preventing water leakage during washing, clothes from being thrown out, and impact on heat exchange and ventilation during drying.

In some embodiments, the passage assembly includes a suction device configured to input a fluid into the washing cavity or suck the fluid from the washing cavity.

In this way, this can be helpful for the fluid to efficiently enter and/or to be discharged from the washing cavity.

In some embodiments, the passage assembly includes a discharge valve between the suction device and the output tube, and an input valve between the suction device and the input connecting tube.

In this way, this can be helpful in controlling the output and/or input of the fluid from the washing cavity. In some embodiments, the washing cavity is at least partially made of an elastic material or a flexible material. In this way, this can be helpful for deformation of the washing cavity to squeeze washing and discharge fluid.

In some embodiments, the washing device includes a drawer assembly. The drawer assembly includes a frame configured to accommodate the washing cavity and a slide rail movably connecting the frame to the box.

In this way, this can be helpful for the washing cavity to move with the drawer assembly relative to the box.

In some embodiments, one or more drawer assemblies are arranged, and each of the drawer assemblies accommodates one washing cavity.

In this way, this can be helpful in washing in one or more drawer assemblies as needed. In some embodiments, each of the drawer assemblies includes a panel, and a display device is arranged on the panel.

In this way, this can be helpful for the user to conveniently acquire information about the washing device.

In some embodiments, the display device is configured to display a closed or open state of the washing cavity.

In this way, this can be helpful for the user to acquire the closed or open state of the washing cavity, so as to ensure proper operation.

In some embodiments, the fluid assembly is arranged in the box independently of the drawer assembly. In this way, this can be helpful in avoiding the mutual effect between the drawer assembly and the fluid assembly.

In some embodiments, a cover plate connected to the fluid assembly is arranged in the box. The cover plate and the drawer assembly are configured to be linked in such a way that the cover plate moves toward the washing cavity and is pressed against the washing cavity when the drawer assembly moves into the box, and the cover plate leaves the washing cavity when the drawer assembly moves out of the box.

In this way, this can be helpful in putting in and taking out clothes when the washing cavity is opened, and/or in washing when the washing cavity is closed.

In some embodiments, the washing device includes a control device. The control device is configured to enable the fluid assembly only when the washing cavity is closed to input a fluid into the washing cavity or suck the fluid from the washing cavity.

In this way, this can be helpful for the automatic, safe, and effective fluid flow of the washing device.

The technical solutions of the embodiments in this application can be combined at will in a case that the technical conditions permit.

This application is to be further described below with reference to the accompanying drawings. The same or similar reference numerals may be used in the figures to refer to the same or similar elements, devices, shapes, and structures in different embodiments, and descriptions of the same or similar elements, devices, shapes, structures, features, and effects in different embodiments and the same or similar elements, devices, shapes, structures, features, and effects in the prior art may also be omitted.
FIG. 1 is a schematic three-dimensional view of a washing device according to some embodiments of the present invention.
FIG. 2 is a schematic exploded view of the washing device in FIG. 1.
FIG. 3 is a schematic diagram of a fluid passage of the washing device in FIG. 1.
FIG. 4 is a schematic diagram of another fluid passage of the washing device in FIG. 1.
FIG. 5 is a partial schematic exploded view of the washing device in FIG. 1.
FIG. 6 is a schematic three-dimensional assembly view of a washing device according to some embodiments.
FIG. 7 is a schematic three-dimensional assembly view of the washing device in FIG. 5.
FIG. 8 is a schematic three-dimensional view of a washing device according to some other embodiments of the present invention.
FIG. 9 is a schematic side view of the washing device in FIG. 2.

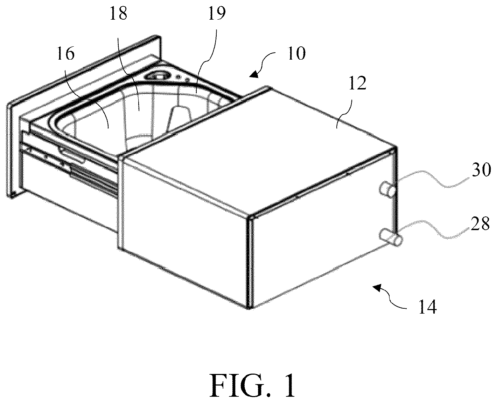

FIG. 1 is a schematic three-dimensional view of a washing device according to some embodiments of the present invention. As shown in FIG. 1, embodiments of the present invention relate to a washing device 10. The washing device includes: a box 12; a fluid assembly 14; and a washing cavity 16, accommodated in the box 12. The washing cavity 16 is replaceable, the washing cavity 16 is closable or openable, the washing cavity 16 is in communication with the fluid assembly 14 when closed, and the washing cavity 16 is disconnected from the fluid assembly 14 when opened.

In this way, this can facilitate thorough cleaning of the washing cavity 16, classified washing, and the like.

The washing device 10 may be a machine configured to wash clothes, fruits and vegetables, tableware, and the like.

The box 12 may be substantially a square body.

The fluid assembly 14 may be arranged in the box 12.

The washing cavity 16 can accommodate to-be-washed articles (not shown). The washing cavity 16 may be in communication with the fluid assembly 14 when closed, and the fluid may enter or be discharged from the washing cavity 16 through the fluid assembly 14 for related washing operations. The washing cavity 16 is disconnected from the fluid assembly 14 when opened, so that the fluid cannot circulate between the washing cavity 16 and the fluid assembly 14, and it is also convenient for the washing cavity 16 to be taken out and replaced.

The washing cavity 16 may be thoroughly cleaned after being taken out, which can guarantee cleanliness and health.

Different washing cavities 16 may be replaced and used for different clothes, fruits and vegetables, tableware, and the like of different persons, which is helpful for classified washing. The washing device 10 may have various functions, and the washing cavity 16 may be small in size and low in cost, which is advantageous in terms of space and cost for an ordinary family.

The fluid may include water, gas, washing additives, and the like.

In some embodiments, the washing cavity 16 includes a holding portion 18 configured to hold a liquid from the fluid assembly 14.

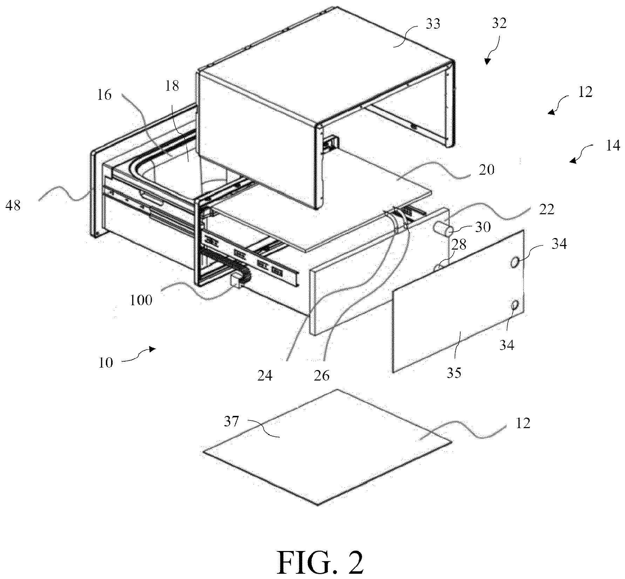

In this way, this can be helpful in washing with the liquid in the holding portion 18. The holding portion 18 has a closable opening 19. The form and closing manner of the opening 19 may be implemented in a plurality of manners. For example, the opening 19 may autonomously contract to be closed, for example, edges are close to and fit each other, or the opening may be closed by, for example, a cover plate 20 (FIG. 2).

In the embodiment shown in the accompanying drawing, the holding portion 18 may have a structure substantially in the shape of a water tank. The opening 19 is open upward and may be closed by the cover plate 20. The holding portion 18 may hold the to-be-washed articles, and the liquid from the fluid assembly 14 is held in the holding portion 18 to participate in the washing, so that the to-be-washed articles can be washed.

FIG. 2 is a schematic exploded view of the washing device in FIG. 1. As shown in FIG. 2, in some embodiments, the box 12 includes a cover plate 20 connected to the fluid assembly 14 and configured to cover the washing cavity 16.

In this way, this can be helpful in washing in the closed washing cavity 16.

The fluid assembly 14 may provide a fluid to the washing cavity 16 through the cover plate 20 when the cover plate 20 covers the washing cavity 16, so as to perform washing operation in the washing cavity 16.

In some embodiments, the cover plate 20 is located at a top of the washing cavity 16.

In this way, the washing device 10 can be simple in structure.

The cover plate 20 may cover the washing cavity 16 from the top.

In some embodiments, the cover plate 20 is movable up and down relative to the washing cavity 16.

In this way, this can be helpful in conveniently opening or closing the washing cavity 16.

For example, the cover plate 20 may move downward to cover the washing cavity 16 and move upward to open the washing cavity 16.

In some embodiments, the fluid assembly 14 includes a passage assembly 22. The passage assembly includes: an input connecting tube 24 and an output connecting tube 26 respectively connected to the cover plate 20, and an input tube 28 and an output tube 30 configured to be respectively in fluid communication with the input connecting tube 24 and the output connecting tube 26.

In this way, this can be helpful for the fluid to enter and/or to be discharged from the washing cavity 16 of the washing device 10.

The fluid may enter the washing cavity 16 closed by the cover plate 20 through the input tube 28 and the input connecting tube 24, and may be discharged from the washing cavity 16 through the output connecting tube 26 and the output tube 30.

In some embodiments, the box 12 includes an enclosure 32. The enclosure includes through holes 34 corresponding to the input tube 28 and the output tube 30.

In this way, this can be helpful for the input tube 28 and the output tube 30 to extend through the enclosure 32 through the through holes 34.

The through holes 34 may be circular. The input tube 28 and the output tube 30 may correspond to shapes and sizes of the through holes 34.

The enclosure 32 may include a main body 33 having a substantially U-shaped cross section, a rear portion 35 combined with the rear of the main body 33, and a lower part 37 combined with lower parts of the main body 33 and the rear portion 35. The enclosure 32 may surround the washing cavity 16 from five directions: up, left, right, back, and down. The through holes 34 may be arranged on the rear portion 35. The washing cavity 16 can move forward and backward relative to the enclosure 32. The input tube 28 and the output tube 30 may be located at the lower rear of the cover plate 20 and behind the washing cavity 16.

For the terms such as "up", "left", "right", "rear", "down" and "front" in this application, reference may be made to the orientation and relationship in the accompanying drawings or the orientation and relationship during actual use of the washing device 10.

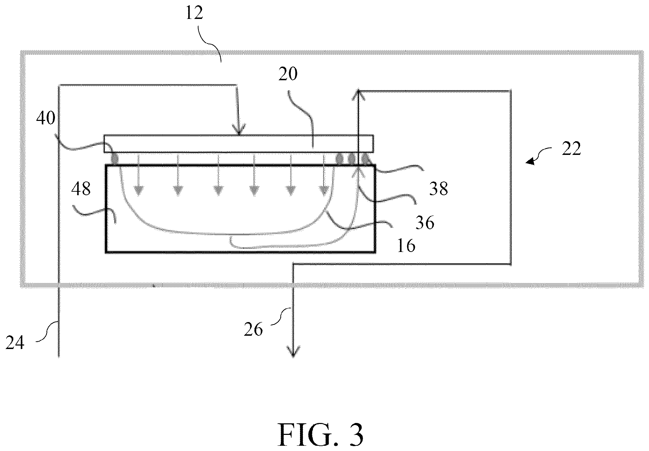

FIG. 3 is a schematic diagram of a fluid passage of the washing device in FIG. 1. As shown in FIG. 3, in some embodiments, the passage assembly 22 includes a branch 36 configured to be in fluid communication with a bottom of the washing cavity 16 and the output connecting tube 26.

In this way, this can be helpful in efficiently outputting the fluid from the washing cavity 16.

The branch 36 may output the fluid from the bottom of the washing cavity 16 and then output the fluid to the output connecting tube 26 connected to the cover plate 20.

In some embodiments, the passage assembly 22 includes a branch seal 38 arranged around the branch 36 to hermetically connect the branch 36 to the output connecting tube 26 when the cover plate 20 covers the washing cavity 16. In this way, this can be helpful in preventing leakage during fluid output.

The seal 38 may be a sealing ring.

In some embodiments, the passage assembly 22 includes a washing seal 40 arranged between the cover plate 20 and the washing cavity 16 to form a sealed space in the washing cavity 16.

In this way, this can be helpful in preventing water leakage during washing, clothes from being thrown out, and impact on heat exchange and ventilation during drying.

The seal 40 may be the same as or different from the seal 38.

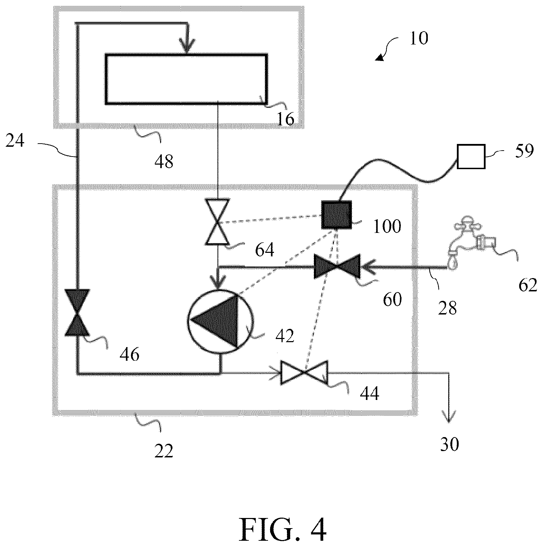

FIG. 4 is a schematic diagram of another fluid passage of the washing device in FIG. 1. As shown in FIG. 4, in some embodiments, the passage assembly 22 includes a suction device 42 configured to input a fluid into the washing cavity 16 or suck the fluid from the washing cavity 16.

In this way, this can be helpful for the fluid to efficiently enter and/or to be discharged from the washing cavity 16.

The suction device 42 may be a single suction element connected to complicated flow paths and valves, or may be composed of more than two suction elements. The suction element may be, for example, a pump.

In some embodiments, the passage assembly 22 includes a discharge valve 44 between the suction device 42 and the output tube 30, and an input valve 46 between the suction device 42 and the input connecting tube 24.

In this way, this can be helpful in controlling the discharge of the fluid from the washing cavity 16 and the entry of the fluid into the washing cavity 16. After the fluid is sucked out of the washing cavity 16 by the suction device 42, the fluid may be discharged from the washing device 10 through the output tube 30 when the input valve 46 is closed and the discharge valve 44 is opened. Alternatively, after the fluid is sucked out of the washing cavity 16 by the suction device 42, the fluid may enter the washing cavity 16 again through the open input valve 46 and the input connecting tube 24 when the discharge valve 44 is closed, so as to be reused and save water resources.

In some embodiments, the washing cavity 16 is at least partially made of an elastic material or a flexible material.

In this way, this can be helpful for deformation of the washing cavity 16 to squeeze washing and discharge fluid.

During use, the washing cavity 16 may be deformed when the fluid is sucked by the suction device 42, which is helpful for squeezing washing, discharging the fluid, and drying. The cavity 16 is especially beneficial for washing clothes, and the mechanical force in the extrusion process is beneficial to the separation of stains from fabric fibers. Therefore, the cavity 16 has a better washing effect.

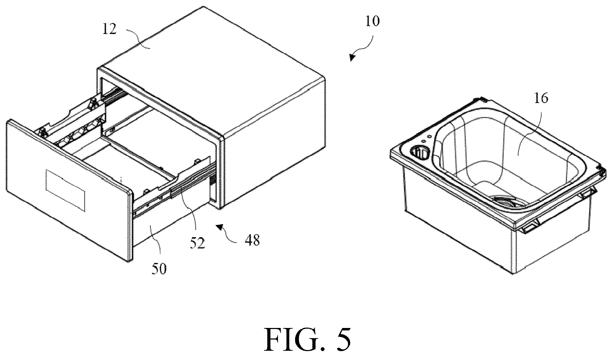

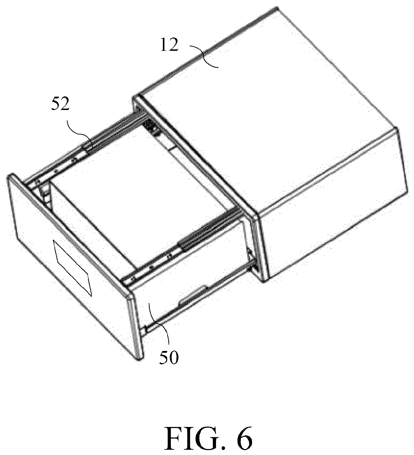

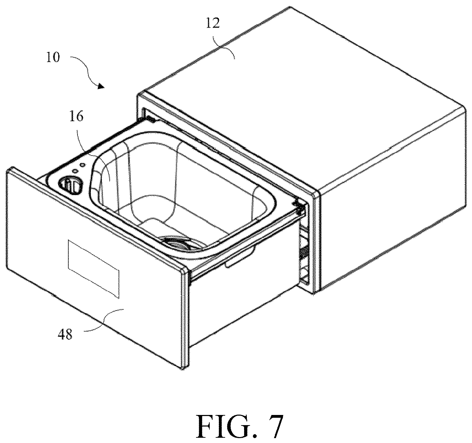

FIG. 5 is a partial schematic exploded view of the washing device in FIG. 1. FIG. 6 is a schematic three-dimensional assembly view of a washing device according to some embodiments. FIG. 7 is a schematic three-dimensional assembly view of the washing device in FIG. 5. As shown in FIG. 5 to FIG. 7, in some embodiments, the washing device 10 includes a drawer assembly 48. The drawer assembly includes a frame 50 configured to accommodate the washing cavity 16 and a slide rail 52 movably connecting the frame 50 to the box 12.

In this way, this can be helpful for the frame 50 to support the washing cavity 16 and enter and exit the box 12 along the slide rail 52.

The frame 50 may have a drawer structure, and may be a substantially square body that is open upward. The washing cavity 16 may be put into the frame 50 downward from above and taken out upward from the frame 50. The slide rails 52 may be located at upper parts of two sides of the frame 50 as shown in FIG. 5 and FIG. 7, or may be located at two sides of a bottom of the frame 50 as shown in FIG. 6. The drawer assembly 48 is movable relative to the box 12.

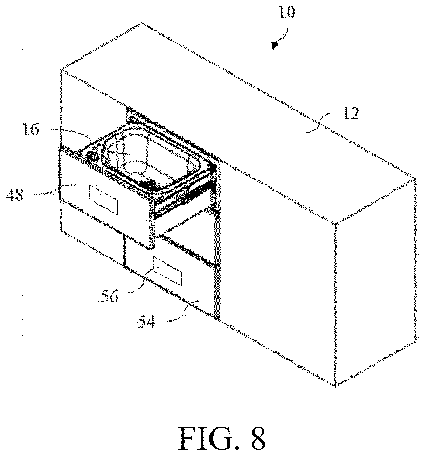

FIG. 8 is a schematic three-dimensional view of a washing device according to some other embodiments of the present invention. As shown in FIG. 8, in some embodiments, one or more drawer assemblies 48 are arranged, and each of the drawer assemblies 48 accommodates one washing cavity 16.

In this way, this can be helpful for classified washing and thorough cleaning of the washing cavity 16.

When the washing device 10 including a plurality of drawer assemblies 48 is used, different washing cavities 16 may be simultaneously used to wash different clothes of different persons, tableware, fruits and vegetables, or the like, thereby easily realizing the classified washing. Certainly, it may be understood that different kinds of to-be-washed things may need to be equipped with corresponding different washing devices and/or washing cavities, but all washing cavities can be replaced based on the principle of the replaceable structure in this application.

The washing cavity 16 of one of the drawer assemblies 48 may be taken out and replaced, so as to thoroughly clean the washing cavity 16, replace the washing cavity 16, and so on.

In some embodiments, each of the drawer assemblies 48 includes a panel 54, and a display device 56 is arranged on the panel 54.

In this way, this can be helpful in conveniently acquiring information about the washing device 10.

The panel 54 may be located at a position at a front side of the drawer assembly 48 and exposed outside the box 12. The display device 56 may display information from the washing device 10 or near-end and remote control devices such as a mobile phone and a computer that communicate with the washing device 10.

In some embodiments, the display device 56 is configured to display a closed or open state of the washing cavity 16.

In this way, this can be helpful in acquiring the closed or open state of the washing cavity 16, ensuring proper operation, and providing a reminder when the washing cavity 16 is in an incorrect position to avoid misoperation.

In some embodiments, the fluid assembly 14 is arranged in the box 12 independently of the drawer assembly 48.

In this way, this can be helpful in avoiding the mutual effect between the drawer assembly 48 and the fluid assembly 14.

When the drawer assembly 48 moves relative to the box 12, the fluid assembly 14 may remain stationary. When the drawer assembly 48 enters the correct position of the box 12, the washing cavity 16 of the drawer assembly 48 may be connected to the fluid assembly 14.

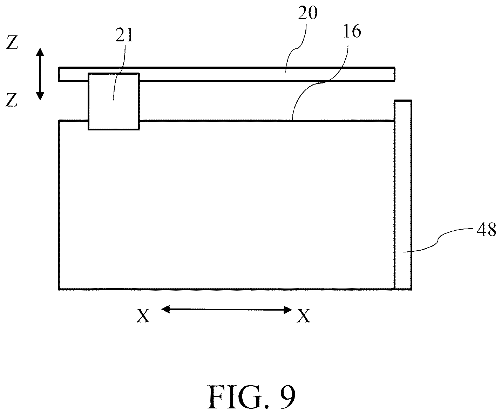

FIG. 9 is a schematic side view of the washing device in FIG. 2. Referring to FIG. 2 and FIG. 9, in some embodiments, a cover plate 20 connected to the fluid assembly 14 is arranged in the box 12. The cover plate 20 and the drawer assembly 48 are configured to be linked in such a way that the cover plate 20 moves toward the washing cavity 16 and is pressed against the washing cavity 16 when the drawer assembly 48 moves into the box 12, and the cover plate 20 leaves the washing cavity 16 when the drawer assembly 48 moves out of the box 12.

In this way, this can be helpful for automatic opening and closing of the washing cavity 16 without manual operation.

For example, the cover plate 20 and the drawer assembly 48 may be connected by a transmission device 21. When the drawer assembly 48 moves into the box 12 in an X-X direction, the transmission device 21 may drive the cover plate 20 to move toward the washing cavity 16 in a Z-Z direction and is pressed against the washing cavity 16. When the drawer assembly 48 moves out of the box 12 in the X-X direction, the transmission device 21 may drive the cover plate 20 to leave the washing cavity 16 in the Z-Z direction, so as to open the washing cavity 16.

The transmission device 21 may adopt various known implementations that can realize the above functions. The transmission device 21 may include a mechanical transmission device such as a gear and a chain. Specifically, for example, the structure and transmission mode of the mechanical transmission part described in Chinese patent for invention with the Patent Application No. CN112709047A may be used as an embodiment of the transmission device 21 as a supplement to this description. Therefore, the details are not described herein again.

Referring to FIG. 2 and FIG. 4, in some embodiments, the washing device 10 includes a control device 100. The control device 100 is configured to enable the fluid assembly 14 only when the washing cavity 16 is closed to input a fluid into the washing cavity 16 or suck the fluid from the washing cavity 16.

In this way, this can be helpful for the automatic, safe, and effective fluid flow of the washing device 10.

The control device 100 may be arranged in the box 12 independently of the washing cavity 16. The control device 100 may include contact and non-contact plugins for transmitting information and energy, for example, an indicator light, a sensor, and/or an electromagnetic induction device, a magnet floating valve, a wireless power supply device, and the like.

When the washing cavity 16 is closed, the control device 100 may enable the fluid assembly 14, open the first fluid valve 60 and the input valve 46, and close the second fluid valve 64 after the power supply 59 inputs electric power, so that the fluid can enter the input tube 28 from a water source such as a faucet 62, then pass through the first fluid valve 60, and be sucked by the suction device 42 through the input valve 46 and the input connecting tube 24 into the washing cavity 16.

Alternatively, when the washing cavity 16 is closed, the control device 100 may enable the fluid assembly 14, open the second fluid valve 64 and the discharge valve 44, and close the first fluid valve 60 and the input valve 46 after the power supply 59 inputs power, so that the fluid can be sucked by the suction device 42 and flow through the second fluid valve 64 and the discharge valve 44 from the washing cavity 16, and is discharged from the output tube 30.

Alternatively, when the washing cavity 16 is closed, the control device 100 may enable the fluid assembly 14, open the second fluid valve 64 and the input valve 46, and close the first fluid valve 60 and the discharge valve 44 after the power supply 59 inputs power, so that the fluid can be sucked by the suction device 42, flow through the second fluid valve 64 and the input valve 46 from the washing cavity 16, and enter the washing cavity 16 again.

The various specific implementations described above and shown in the accompanying drawings are only used to describe the present invention, but not the entirety of the invention. Within the scope of the basic technical idea of the present invention, any form of changes made to the present invention by a person of ordinary skill in the related art shall fall within the protection scope of the present invention.

## Claims

1. A washing device (10), **characterized by** comprising:
a box (12);
a fluid assembly (14); and
a washing cavity (16), accommodated in the box (12), wherein the washing cavity (16) is replaceable, the washing cavity (16) is closable or openable, the washing cavity (16) is in communication with the fluid assembly (14) when closed, and the washing cavity (16) is disconnected from the fluid assembly (14) when opened.

2. The washing device (10) according to claim 1, **characterized in that** the washing cavity (16) comprises a holding portion (18) configured to hold a liquid from the fluid assembly (14).

3. The washing device (10) according to claim 1, **characterized in that** the box (12) comprises a cover plate (20) connected to the fluid assembly (14) and configured to cover the washing cavity (16).

4. The washing device (10) according to claim 3, **characterized in that** the cover plate (20) is located at a top of the washing cavity (16).

5. The washing device (10) according to claim 3, **characterized in that** the cover plate (20) is movable up and down relative to the washing cavity (16).

6. The washing device (10) according to claim 3, **characterized in that** the fluid assembly (14) comprises a passage assembly (22), and the passage assembly comprises: an input connecting tube (24) and an output connecting tube (26) respectively connected to the cover plate (20), and an input tube (28) and an output tube (30) configured to be respectively in fluid communication with the input connecting tube (24) and the output connecting tube (26).

7. The washing device (10) according to claim 6, **characterized in that** the box (12) comprises an enclosure (32), and the enclosure comprises through holes (34) corresponding to the input tube (28) and the output tube (30).

8. The washing device (10) according to claim 6, **characterized in that** the passage assembly (22) comprises a branch (36) configured to be in fluid communication with a bottom of the washing cavity (16) and the output connecting tube (26).

9. The washing device (10) according to claim 8, **characterized in that** the passage assembly (22) comprises a branch seal (38) arranged around the branch (36) to hermetically connect the branch (36) to the output connecting tube (26) when the cover plate (20) covers the washing cavity (16).

10. The washing device (10) according to claim 6, **characterized in that** the passage assembly (22) comprises a washing seal (40) arranged between the cover plate (20) and the washing cavity (16) to form a sealed space in the washing cavity (16).

11. The washing device (10) according to claim 6, **characterized in that** the passage assembly (22) comprises a suction device (42) configured to input a fluid into the washing cavity (16) or suck the fluid from the washing cavity (16).

12. The washing device (10) according to claim 11, **characterized in that** the passage assembly (22) comprises a discharge valve (44) between the suction device (42) and the output tube (30) and an input valve (46) between the suction device (42) and the input connecting tube (24).

13. The washing device (10) according to claim 1, **characterized in that** the washing cavity (16) is at least partially made of an elastic material or a flexible material.

14. The washing device (10) according to claim 1, **characterized by** comprising a drawer assembly (48), wherein the drawer assembly comprises a frame (50) configured to accommodate the washing cavity (16) and a slide rail (52) movably connecting the frame (50) to the box (12).

15. The washing device (10) according to claim 14, **characterized in that** one or more drawer assemblies (48) are arranged, and each of the drawer assemblies (48) accommodates one washing cavity (16).

16. The washing device (10) according to claim 14, **characterized in that** the drawer assembly (48) comprises a panel (54), and a display device (56) is arranged on the panel (54).

17. The washing device (10) according to claim 16, **characterized in that** the display device (56) is configured to display a closed or open state of the washing cavity (16).

18. The washing device (10) according to claim 14, **characterized in that** the fluid assembly (14) is arranged in the box (12) independently of the drawer assembly (48).

19. The washing device (10) according to claim 14, **characterized in that** a cover plate (20) connected to the fluid assembly (14) is arranged in the box (12), wherein the cover plate (20) and the drawer assembly (48) are configured to be linked in such a way that the cover plate (20) moves toward the washing cavity (16) and is pressed against the washing cavity (16) when the drawer assembly (48) moves into the box (12), and the cover plate (20) leaves the washing cavity (16) when the drawer assembly (48) moves out of the box (12).

20. The washing device (10) according to claim 1, **characterized by** comprising a control device (100), wherein the control device (100) is configured to enable the fluid assembly (14) only when the washing cavity (16) is closed to input a fluid into the washing cavity (16) or suck the fluid from the washing cavity (16).
